# EUROPEAN PATENT SPECIFICATION

(11) **EP 3 508 537 B1**
(45) Date of publication and mention of the grant of the patent: **14.09.2022**
(21) Application number: 18213775.2
(22) Date of filing: 18.12.2018
(51) Int. Cl.: C09C 1/36, C09C 3/12, C09D 1/00, C09D 7/62

(54) **HYDROPHOBIC PIGMENT MODIFIED BY ALKYLTRIHYDROXYSILANES**
HYDROPHOBE PIGMENTMODIFIKATION DURCH BESCHICHTUNG MIT ALKYLTRIHYDROXYSILANEN
MODIFICATION DE PIGMENT HYDROPHOBE PAR TRAITEMENT AVEC DES TRIHYDROXIDES D'ALKYLSILANES

(30) Priority: 19.12.2017 US 201762607658 P
(43) Date of publication of application: 10.07.2019
(73) Proprietor: Dow Global Technologies Llc, Midland, MI 48674 (US); Rohm and Haas Company, Collegeville, PA 19426 (US); The Regents of the University of California, Oakland, CA 94607 (US)
(72) Inventor: BOHLING, James C, Collegeville, PA Pennsylvania 19426 (US); GUO, Yijun, Berkeley, CA California 94720 (US); KATZ, Alexander, Berkeley, CA California 94720 (US); MISHRA, Manish, Berkeley, CA California 94720 (US); RADKE, Clayton J., Berkeley, CA California 94720 (US); ROPER III, John A., Midland, MI Michigan 48674 (US); VAN DYK, Antony K., Collegeville, PA Pennsylvania 19426 (US)
(74) Representative: Beck Greener LLP

(56) References cited:
- US-A- 3 816 152
- US-A1- 2007 218 297
- US-A1- 2017 022 384

## Description

### Background of the Invention

The present invention relates to the modification of the surface of pigment particles with a hydrophobic material.

Performance of water-borne paint formulations is influenced in part by the surface chemistry of the inorganic pigment used to opacify the paint. Pigments such as the widely used TiO₂ tend to be hydrophilic in their native state and therefore not particularly effective as a barrier to penetration of water and water-soluble colorants at the pigment-binder interface. For this reason, it would be advantageous to modify the surface of inorganic pigment particles to provide coatings with improved resistance to stains and corrosion.

The dispersion stability of pigment particles in the paint formulation affects the hiding efficiency of the consequent film. Pigment aggregates provide less hiding than isolated primary particles; therefore, it would be further advantageous to modify the surface of pigment particles to minimize pigment aggregation in films, thereby reducing the amount of pigment needed in the formulation.

It is known in the art to modify the surface of pigment particles with hydrophobic groups. For example, US 2017/0022384 A1 discloses an aqueous dispersion of inorganic pigment particles modified with polysiloxane or silyl groups. US3816152A discloses water-dispersible coupling agent formulations comprising mixtures of an organofunctional silane and a silicon compound. US2007218297 discloses a coating composition including a SiO₂ ceramic matrix that includes the condensation product of a silica sol and an organoalkoxysilane. In theory, hydrophobically modified pigment particles would be expected to improve barrier properties and more strongly associate with binder particles in a latex, thereby improving hiding. Nevertheless, in practice, formulators continue to experience difficulty in dispersing hydrophobically modified pigment particles in water because of their poor wettability and the poor stability of the aqueous dispersions of the hydrophobically modified pigment particles. The use of dispersants can address these issues in part, but dispersants present problems of their own, including limiting film formation, increasing water sensitivity, disrupting adhesion to certain substrates, and promoting exudation (oozing) of non-film forming additives such as surfactants, defoamers, coalescents, and dispersants to the surface of the coating. Moreover, the maximum achievable pigment volume concentrations (PVCs) for these hydrophobically modified pigment particles is substantially lower than that achievable for the unmodified pigment particles, to the point of being commercially impractical.

It would therefore be advantageous to increase pigment volume concentrations of aqueous dispersions of hydrophobically modified pigments to above 37 volume percent without concomitant increase in viscosity, and it would further be advantageous to be able to disperse pigment in water while reducing, and even eliminating the use of ancillary dispersants.

### Summary of the Invention

The present invention addresses a need in the art by providing, in a first aspect, a composition comprising an aqueous dispersion of metal oxide pigment particles coated with an organosilane polymer comprising structural units of an alkyltrihydroxysilane or a salt thereof, wherein the aqueous dispersion has a pH in the range of from 8.5 to 12.

In a second aspect, the present invention is a method for preparing an aqueous dispersion of metal oxide pigment particles according to the first aspect (hydrophobically modified pigment particles) comprising the step of contacting in the presence of water and at a pH of from 8.5 to 12, basic functionalized metal oxide pigment particles with an organosilane to form the aqueous dispersion of hydrophobically modified pigment particles; wherein the organosilane is an alkyltrihydroxysilane or a salt thereof.

The present invention provides an aqueous dispersion of hydrophobically modified pigment particles at a high solids content at an acceptably low viscosity and can be prepared without ancillary dispersants. Such dispersions form coatings that are remarkably water-resistant.

### Detailed Description of the Invention

In a first aspect, the present invention is a composition comprising an aqueous dispersion of metal oxide pigment particles coated with an organosilane polymer comprising structural units of an alkyltrihydroxysilane or a salt thereof, wherein the aqueous dispersion has a pH in the range of from 8.5 to 12.

As used herein, a structural unit of an alkyltrihydroxysilane refers to the following fragment: 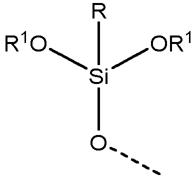 where R is an alkyl group, preferably a C₁-C₁₈-alkyl group, more preferably a C₁-C₄-alkyl group, and most preferably methyl; and each R¹ is independently H, a bond to the pigment particle; M, or another Si atom; wherein M is an alkali metal or ammonium counterion, preferably a lithium, a sodium, or a potassium counterion; and the dotted line represents the point of attachment of the oxygen atom to the pigment particle. Preferably, at least 50, more preferably at least 65 weight percent of the organosilane polymer comprises structural units of the alkyltrihydroxysilane or a salt thereof.

The aqueous dispersion of metal oxide pigment particles coated with structural units of an alkyltrihydroxysilane (that is, the aqueous dispersion of hydrophobically modified metal oxide pigment particles) is advantageously prepared by a) contacting metal oxide pigment particles, or an aqueous dispersion of metal oxide pigment particles, with a base to form basic metal oxide pigment particles or an aqueous dispersion of basic metal oxide particles, then b) contacting the basic metal oxide particles with an organosilane in the presence of water and at a pH in the range of from 8.5, preferably from 9, more preferably from 9.2 to 12, preferably to 11, more preferably to 10, and most preferably to 9.8, to form the aqueous dispersion of hydrophobically modified pigment particles. Preferably, in the first step, an aqueous dispersion of metal oxide pigment particles are contacted with a base to form an aqueous dispersion of basic metal oxide particles.

The most preferred alkyltrihydroxysilane, methyltrihydroxysilane, can be obtained commercially or prepared *in situ* by aqueous alkali metal hydroxide hydrolysis of polymethylhydrosiloxane (PMHS) at a pH of >12. It has been found to be particularly advantageous for storage to maintain an aqueous solution of the methyltrihydroxysilane at a high pH until contact with the basic pigment particles to minimize self-condensation of the methyltrihydroxysilane. It is further advantageous to maintain a pH in the range of 9 to 10, more preferably from 9.2 to 9.8 during the methyltrihydroxysilane addition step through separate and concomitant addition of a strong acid to the basic pigment particles to minimize degradation of the functionalized amine.

Examples of suitable metal oxide pigment particles include oxides and carbonates of titanium, aluminum, silicon, iron, calcium, magnesium, zirconium, or zinc, and mixtures thereof. Examples of preferred pigment particles include CaCO₃, Al₂O₃, and TiO₂ pigment particles. TiO₂ pigment particles include rutile and anatase TiO₂, as well as TiO₂ surface treated with a variety of metal oxides and hydroxides including alumina, silica, and zirconia.

The average particle size of the metal oxide pigment particles is preferably from 10 nm, more preferably from 20 nm, more preferably from 50 nm, more preferably from 100 nm, more preferably from 200 nm, and most preferably from 240 nm, to preferably 5 µm, more preferably to 1 µm, more preferably to 500 nm, more preferably to 400 nm, and most preferably to 300 nm. Average particle size of the metal oxide pigment particles is defined by the average particle size determined by dynamic light scattering using a Malvern Zetasizer Nano Particle Size Analyzer.

Examples of suitable bases include amines such as trimethylamine, triethylamine, dimethylamine, diethylamine, 2-amino-2-methyl-1-propanol, piperidine, and piperazine; amino acids such as arginine, histidine, and lysine; iminoalkydiamines such as guanidine; purines such adenine; pyrimidines such as cytosine; ammonium hydroxide; quaternary tetra-C₁-C₁₂-alkyl ammonium hydroxides such as tetramethylammonium hydroxide, tetraethylammonium hydroxide, and tetrabutylammonium hydroxide; and alkali metal hydroxides such as LiOH, NaOH, and KOH. The base is preferably used stoichiometrically or in stoichiometric excess with respect to base-reactive sites of the pigment particles. Such reactive sites include acidic OH groups and Lewis acid metal cations such as Al^{III}, Ti^{IV}, Zr^{IV}, Zn^{IV}, Ca^{II}, and Mg^{II}.

The alkyltrihydroxylsilane, preferably C₁-C₁₈-alkyltrihydroxylsilane, more preferably C₁-C₄-alkyltrihydroxylsilane, and most preferably methyltrihydroxysilane, is advantageously added to the basic pigment particles in a sufficient amount to convert the pigment particles to hydrophobically modified pigment particles. The term "hydrophobically modified" means that the modified pigment particles have <25% by weight water uptake relative to the unmodified dry pigment particles at 90% relative humidity as measured using a DVS Advantage ET Analyzer (Surface Measurement Systems).

The alkyltrihydroxylsilane binds to the pigment particles to form the hydrophobic organosilane polymer coating comprising structural units of the alkyltrihydroxysilane. It may be desirable to post-treat the hydrophobic coating with a capping agent such as trimethylsilanol to form O-trimethylsilyl groups. Preferably, for a pigment particle having a particle size in the range of from 250 nm to 350 nm, the wt. % Si in the organosilane polymer and arising from addition of the alkyltrihydroxylsilane to the basic pigment particles is preferably in the range of from 0.1, and more preferably from 0.5 wt. % percent, to preferably 3, and more preferably to 1.5 wt. %, based on the weight of the organosilane polymer. Alternatively, the concentration of Si atoms in the organosilane polymer and arising from addition of the alkyltrihydroxylsilane to the basic pigment particles, is preferably in the range of from 4, more preferably from 10, and most preferably from 20 Si atoms/nm² of the external pigment surface area to preferably 120, more preferably to 100, more preferably to 80, and most preferably to 60 Si atoms/nm² of external pigment surface area. As used herein, external pigment surface area refers to the geometrical external surface area of a sphere having the same diameter as a pigment particle, as measured by dynamic light scattering, as performed using Malvern Zetasizer Nano Particle Size Analyzer. The extent of alkyltrihydroxylsilane incorporation onto the pigment particles is determined by digestion followed by Si analysis by inductively coupled plasma-atomic emission spectroscopy (ICP-AES).

It has surprisingly been discovered that an aqueous dispersion of hydrophobically modified pigment particles can be prepared at a volume solids fraction of 0.37 to 0.43, (corresponding to ~70 to 75 weight percent solids for Ti-Pure R706 TiO₂) without any significant increase in slurry viscosity as compared with the unmodified slurry at the same concentration. Thus, for a 70 weight percent solids (0.37 volume solids fraction) aqueous slurry comprising the hydrophobically-modified pigment particles, shear stresses are preferably not greater than 0.1 Pa, and preferably not greater than 0.03 at a shear rate in the range of 0.2 s⁻¹.

The viscosities for the same slurry are preferably not greater than 0.25 Pa·s at a shear rate of 0.1 s⁻¹ and preferably not greater than to 0.03 Pa·s at a shear rate of 100 s⁻¹. These viscosities are ~30- to 300-fold higher than that of water, and are easily pourable liquid-like slurries.

For a 75 weight percent solids (0.43 volume solids fraction) aqueous slurry comprising the hydrophobically-modified pigment particles, shear stresses are preferably not greater than 1 Pa at a shear rate of 0.2 s⁻¹. The viscosities for the same slurry are preferably not greater than 10 Pa·s at a shear rate of 0.1 s⁻¹ and preferably not greater than to 0.2 Pa·s at a shear rate of 100 s⁻¹. These viscosities are ~200- to 10,000-fold higher than that of water and, again, are easily pourable liquid-like slurries. As a point of comparison, pourable honey and Castor oil have vicosities that are 6,000-fold and 1,000-fold higher than that of water, respectively. This finding is in sharp contrast with the observation that hydrophobically modified dispersions of pigment particles that are not pre-treated with a base prior to silane surface modification are unpourable in this concentration range.

It has also been discovered that the aqueous dispersions of the hydrophobically modified pigment particles can be achieved without an ancillary dispersant such as an anionic polymeric dispersant, as is required in the teachings of US 2017/0022384 A1. Accordingly, in another aspect of the invention, the composition of the present invention comprises a substantial absence of a dispersant, that is, less than 0.09, preferably less than 0.05, more preferably less than 0.01, and most preferably 0 weight percent of a dispersant. The substantial absence of dispersants is particularly advantageous in coating formulations since dispersants, particularly anionic polymeric dispersants, limit film formation and increase water sensitivity of coatings and promote undesirable exudation of non-solids (e.g., surfactants) to the surface of the coatings.

The preparation of the aqueous dispersion of the hydrophobically modified pigment particles is preferably carried out in the absence of organic solvents. (Although some small amount of a C₁-C₄-alcohol can, in principal, be generated in the process, these byproducts do not constitute organic solvents.) As such, the process of the present invention is advantaged over previously described pigment modification processes that require the use organic solvents. Accordingly, in another embodiment of the invention, the process of the present invention is carried out in the substantial absence of organic solvents, that is, using less than 5, more preferably less than 1, and most preferably 0 percent of added organic solvent, based on the weight of organic solvent and the unmodified pigment particles.

The composition of the present invention is suitable for coatings formulations, which includes a latex, and preferably one or more additional materials including defoamers, surfactants, thickeners, extenders, coalescents, biocides, and colorants. The composition provides coating compositions with improved water-resistance over pigment particles that are not hydrophobically modified, as demonstrated by the following examples.

### Examples

### Calculation of Amine Functionalization of Pigment Particles

The extent of amine functionalization was determined by acid-base back titration as described in ACS Catalysis 2014, 302-310.

### Comparative Example 1 - Hydrophobic modification of wet paste of TiO₂ with Methyltrihydroxysilane

### A. Preparation of Methyltrihydroxysilane from Polymethylhydrosiloxane

To a 3-neck plastic spinner flask was added 4 M KOH solution (244 mL). The solution was purged with N₂ for 15 min, after which time polymethylhydrosiloxane (PMHS, from Aldrich Cat. No. 176206, Mₙ = 1700-3200 g/mol, CAS No. 63148-57-2, 36 mL) was added at a rate of 10 mL/h in stirring condition (600 rpm) and under N₂. Stirring was continued for 6 h to obtain a homogeneous transparent solution. FTIR spectroscopic analysis confirmed conversion of all of the PMHS to methyltrihydroxysilane (MTHS). The solution was stored in a tightly capped container to prevent exposure to atmospheric carbon dioxide. The concentration of MTHS in water was 0.234 g/mL.

### B. Preparation of a TiO₂ Wet Paste

Ti-R706 TiO₂ powder (125 g) was dispersed in water (250 mL) in the presence of TAMOL^{™} 1124 Dispersant (A Trademark of The Dow Chemical Company or its Affiliates, 1.25 mL). The resultant slurry was stirred with a motorized head mixer at 1950 rpm for 20 h, then placed in equal parts into four centrifuge containers. Centrifugation was carried out at 14000 rpm for 3 min. The solids were broken into small pieces with a spatula and the contents of each container were washed with water (250 mL) to remove residual dispersant. This water wash consisted of treatment in a vortex mixer for 5 min followed by ultrasonication-bath treatment for 5 min. The aqueous slurry was centrifuged again at 14000 rpm for 3 min. The entire water-wash process was repeated for three additional times and the solids level was adjusted to form a wet paste with a solids content of 83.8 wt. % TiO₂.

### C. Surface Treatment of TiO₂ Wet Paste with Methyltrihydroxysilane at pH 10

A TiO₂ slurry was prepared with a portion of the wet paste prepared in Step B (136 g), water (2 mL), and TAMOL 1124 Dispersant (680 µL). The slurry was sheared in a Flacktek speed mixer at 1700 rpm for 2 min in the presence of two small zirconia beads. Additional water (59 mL) was added to this slurry followed by high-shear mixing of this diluted slurry (70 weight percent TiO₂) at 3500 rpm for 3 min in the absence of zirconia beads. Subsequently, a portion of the aqueous MTHS solution generated in Step A (24.4 mL, 5.71 g) was added with head-mixer stirring (1950 rpm) to the aqueous slurry along with simultaneous addition of 2.0 M HCl (34 mL) to adjust the pH of the resulting slurry to 10. After 5 min of head-mixer stirring, water (50 mL) was added, and stirring was continued for another 4 h, after which time the mixture was equally divided into four centrifuge containers and centrifuged at 7000 rpm for 7 min. The mass collected after centrifugation was broken down with a spatula and washed with 200 mL of water before being recentrifuged. This procedure was repeated for two more times, and the resulting material was obtained as a wet paste with a solids content of 79 wt. % TiO₂.

After drying for 48 h at room temperature in a flow hood, a capillary rise test was performed to assess the degree of hydrophobicity of the dry material following surface modification. For the capillary rise test, 2.5 mM bromothymol dye solution that was stabilised at pH 8 in aqueous HEPES buffer was used. A 1.5 mm capillary was filled with dried hydrophobic powder, by blocking one end of it with cotton and a 4 cm height of capillary was compactly filled up with powder, by taping the powder-filled capillary. Finally, the capillary was dipped in dye solution for 4 h and the rise of dye was measured with a ruler. The contact angle was subsequently calculated from the height of dye rise, using Washburn's equation. The dry material was hydrophobic, as represented by a rise height of the dye of zero in the capillary rise test above.

The resulting 79 wt. % slurry was diluted to 70 wt. % solids, followed by high-shear treatment for 3 min in the absence of zirconia beads. The pH was subsequently raised up to 8.7 using 1 M KOH (10 µL), with further high-shear mixing at 3500 rpm for 1 min in the absence of zirconia beads. Finally, the slurry was aged after the last high-shear mixing for 2.5 h, centrifuged, washed with water, and dried for 48 h at room temperature.

An aqueous slurry (70 wt. % solids) was prepared from the wet paste prior to drying. The rheological characteristics of this slurry were measured with and without dispersant. Under all conditions investigated, the aqueous slurry exhibits a shear stress of > 1 Pa at a shear rate of 0.1 s⁻¹. This magnitude of the shear stress at such a low shear rate is unacceptably large for a coatings application. Also, at the same low shear rate, the viscosity is more than 10 Pa^{∗}second, which is also too large by more than an order of magnitude compared to what is desirable for a coatings application. Attempts to prepare a 75 wt. % solids slurry from the wet paste prior to drying resulted in the formation of a solid paste. Accordingly, although TiO₂ is hydrophobically modified, it has unacceptable rheological characteristics for coatings applications.

### Comparative Example 2 - Hydrophobic modification of wet paste of TiO₂ with Methyltrihydroxysilane and Endcapped with Trimethylsilanol

A slurry of the hydrophobically modified TiO₂ pigment particles was prepared substantially as described in Comparative Example 1 except that the slurry was further capped with trimethylsilanol (TMSOH) after treatment with MTHS.

A portion of the wet paste as prepared in Comparative Example 1 (27.2 g, 22.8 g solids) was dried at room temperature in a fume hood for 5 h. The dried material was finely ground using a mortar and pestle, to prepare a dry free flowing powder. A portion of the dried powder (23 g) was combined with TMSOH (4.7 mL, >97% purity). The resulting slurry was sheared in the presence of a zirconia bead at 1700 rpm for 2 min. The slurry was then diluted to 70 wt. % solids, with the addition of 5.2 mL of neat TMSOH and was further subjected to further shearing at 3500 rpm in the absence of a zirconia bead for 3 min. This mixture was then transferred to a 100-mL round bottom flask and stirred for 24 h using a motorized head mixer at a stirring speed of 1900 rpm. Water (200 mL) was added to the mixture followed by vortexing for 3 min. Solids were collected via centrifugation at 14,000 rpm for 3 min, then broken into small pieces with a spatula, then washed with 250 mL of water, then centrifuged. This washing procedure was repeated 6 times to remove residual TMSOH. The final material was stored as a wet paste at a solids content of 83.8 wt. %.

After drying for 48 h at room temperature, the capillary rise test was performed to confirm that the dried material exhibited hydrophobicity. This degree of hydrophobicity of the surface-modified material of Example 2 was observed both before and after a high-shear mixing stress test at pH 8.7.

Diluted aqueous slurries (70 wt. % solids) were prepared with and without dispersant; as was the case for the uncapped pigment prepared as described in Comparative Example 1, the slurry of the capped hydrophobically modified pigment was found to have unacceptable rheological characteristics for coatings applications. Once again, attempts to prepare a 75 wt. % solids slurry from the wet paste prior to drying resulted in the formation of a solid paste.

### Example 1 - Hydrophobic modification of Amine-Functionalized TiO₂ with Methyltrihydroxysilane at pH 10.0

### A. Pre-Treatment of Ti02 with Triethylamine

In a 250-mL round bottom flask, Ti-R706 TiO₂ powder (250 g), water (500 mL), TAMOL 1124 Dispersant (2.5 mL), and triethylamine (TEA, 2.5 mL) were added in the order listed, and the resulting slurry was stirred with a motorized head mixer at 1950 rpm for 20 h. Excess amine was was removed by the following procedure: The slurry was transferred into centrifuge vessels in four equal parts and centrifugation was carried out at 14,000 rpm for 3 min. The solid mass collected after centrifugation was broken into small pieces with a spatula, followed by addition of water (250 mL) to each of the four parts. Each sample was subjected to vortex mixing for 5 min followed by ultrasonication for 5 min. Centrifugation was carried out again at 14,000 rpm for 3 min resulting in wet pastes with a solids content of 83.8 wt. % TiO₂. The entire water-wash process was repeated for four more times for each sample to create a slurry at 83.8 wt. % solids that was free of any amine or ammonia odor. The amine that was not recovered by the extensive water washing step is said to be amine-functionalized Ti02 particles.

The extent of amine functionalization of the TiO₂ particles was measured by acid-base back titration using 0.01 M HCl and 0.01 M NaOH, as described in ACS Catalysis 2014, 4, 302. It was found that 34 µmol/g of basic sites were available on the surface of the TEA treated TiO₂ particles (TEA-R706), which corresponds to a saturation surface coverage of bound amine of 2 TEA molecules/nm² of total pigment surface area.

The capillary rise test as described in Comparative Example 1 was performed to assess the hydrophobicity of TEA-R706. TEA-R706 exhibited a capillary rise of bromthymol blue dye of 3.2 cm, indicating that TEA-R706 was even less hydrophobic than the untreated pigment and that TEA-R706 was not a hydrophobic material.

### B. Hydrophobic Modification of TEA-R706 with Methyltrihydroxysilane

The procedure as described in Comparative Example 1 was followed except that the MTHS was added to a wet paste of TEA-R706 to form a hydrophobically modified product having a solids content of 83.8 wt. %. The product was dried for 48 h at room temperature as described in Comparative Example 1, then subjected to the capillary rise test to confirm that the product was indeed hydrophobic. The same degree of hydrophobicity of the surface-modified material of the product was also observed after a high-shear mixing stress test at pH 8.7.

Surprisingly, the rheological characteristics of the product were significantly improved relative to the product of Comparative Example 1. For example, for a 70 wt. % aqueous slurry containing 0.05 wt. % Triton X-100 surfactant, a shear stress of 0.01 Pa at a shear rate of 0.1 s⁻¹ was observed. The shear stress at such a low shear rate is acceptable for coatings applications. Moreover, at the same low shear rate, the viscosity for this sample is approximately 0.1 Pa^{∗}s, which is also reasonable for coatings applications. Accordingly, the hydrophobically modified material of this example has acceptable rheological characteristics for coatings applications when stored as wet paste.

The particle size of the hydrophobically modified pigment particles was measured to be in the range of 375 nm to 390 nm as measured by dynamic light scattering.

### Example 2 - Hydrophobic Modification of Amine-Functionalized TiO₂ with Methyltrihydroxysilane at pH 9.5

The procedure was carried out as described in Example 1 except that the pH was adjusted to 9.5 instead of 10 during the step of reacting MTHS with the TEA-R706 wet paste. The amount of the organosilane polymer coating in the dry material after hydrophobic modification corresponded to an additional 1.0 wt. % Si relative to dry TEA-R706, or 40 molecules of condensed organosilane per nm² of external pigment surface area, each of which consists of a single methyl group and a single Si atom. The hydrophobically modified wet paste was diluted to a 70 wt. % aqueous slurry and the rheological characteristics were measured for slurries with and without TRITON^{™} X-100 Dispersant (0.05 wt%, A Trademark of The Dow Chemical Company or its Affiliates). In the absence of dispersant, the slurry exhibited a shear stress of 0.13 Pa and viscosity of 1.3 Pa^{∗}s at a low limiting shear rate of 0.1 s⁻¹, which was a further improvement over what was observed in Example 1. Moreover, the particle size of the modified particles in this example was found to be 290 nm by dynamic light scattering, which nearly corresponded to the particle size of the unmodified R-706 TiO₂ particles.

### Example 3 - Hydrophobic Modification of Amine-Functionalized TiO₂ with Methyltrihydroxysilane at pH 9.5 followed by Capping with Trimethylsilanol

A portion of the wet paste from Example 2 prior to the dilution step (13.6 g, 83.0 wt. % solids) was mixed with Tamol 1124 dispersant (0.3 wt. %, based on the weight of total solids) in a high-shear mixer at 1700 rpm using two zirconia beads for 2 min. This blend was diluted with water to 70 wt. % solids and subjected to further mixing at 3500 rpm (without zirconia beads) for 3 min. The sample was dried in a fume hood at room temperature for 3 h, then finely ground to obtain a free flowing powder (12.5 g). The powder was combined with trimethylsilanol (TMSOH, 2.5 mL, > 97 % neat liquid), and the resulting slurry was mixed at 1700 rpm with a zirconia bead for 2 min, then diluted to 70 wt. % solids with further addition of TMSOH (2.8 mL). The diluted slurry was then mixed at 3500 rpm (without zirconia beads) for 3 min, then vortexed for 24 h and centrifuged with water (200 mL). The solid mass was broken into small pieces using a spatula and vortexed with water (200 mL) followed by ultrasonication for 5 min. This washing step was repeated three more times, and the product was stored as a wet paste at 83.0 wt. % solids content. The concentration of trimethylsilyl capping in the dry material corresponded to an additional 0.15 wt. % Si relative to the dry material prior to capping (that is, the dry material resulting from Example 2); equivalently, the concentration of capping corresponds to the addition of 6 trimethylsilyl groups/nm² of external pigment surface area.

The particle size of the material as measured by dynamic light scattering was 290 nm. A low viscosity of 0.25 Pa^{∗}s and a low shear stress of ~0.02 Pa at the low limiting shear rate of 0.1 s⁻¹ were measured, leading to the conclusion that the TMSOH capped material would be suitable for coatings formulations, even in the absence of added dispersant.

## Claims

1. A composition comprising an aqueous dispersion of metal oxide pigment particles coated with an organosilane polymer comprising structural units of an alkyltrihydroxysilane or a salt thereof, wherein the aqueous dispersion has a pH in the range of from 8.5 to 12.

2. The composition of Claim 1 wherein the pigment particles are TiO₂ particles, and wherein the organosilane polymer further comprises trimethylsilyl groups.

3. The composition of Claim 1 wherein the organosilane polymer comprises at least 50 weight percent structural units of the alkyltrihydroxysilane.

4. The composition of Claim 3 wherein the organosilane polymer has a concentration of Si atoms in the range of from 0.1 to 3 weight percent, based on the weight of the polymer.

5. The composition of Claim 3 wherein the organosilane polymer has a concentration of Si atoms in the range of from 4 to 120 Si atoms/nm² of external pigment surface area.

6. The composition of Claim 3 wherein the TiO₂ has a volume solids fraction in the range of from 0.37 to 0.43; a shear viscosity of not greater than 0.25 Pa ^{∗} s at a shear rate of 0.1 s⁻¹ at a TiO₂ volume solids fraction of 0.37; and a shear viscosity of not greater than 1 Pa ^{∗} s at a shear rate of 0.2 s⁻¹ at a TiO₂ volume solids fraction of 0.43.

7. A method for preparing an aqueous dispersion of metal oxide pigment particles according to any one of Claims 1 to 6, the method comprising the step of contacting, in the presence of water and at a pH of from 8.5-12, basic metal oxide pigment particles with an organosilane to form the aqueous dispersion of metal oxide pigment particles; wherein the organosilane is an alkyltrihydroxysilane or a salt thereof.

8. The method of Claim 7 wherein the metal oxide is Ti02.

9. The method of Claim 8 wherein the alkyltrihydroxysilane is contacted with the aqueous dispersion of the basic TiO₂ pigment particles as an aqueous solution of a salt of methyltrihydroxysilane at pH of >12, wherein the aqueous dispersion of basic TiO₂ particles is further contacted separately and concomitantly with an aqueous solution of an acid to maintain a pH in the range of 9 to 10.

## Patentansprüche

1. Zusammensetzung, umfassend eine wässrige Dispersion von Metalloxidpigmentteilchen, die mit einem Organosilanpolymer beschichtet ist, umfassend Struktureinheiten eines Alkyltrihydroxysilans oder eines Salzes davon, wobei die wässrige Dispersion einen pH-Wert in dem Bereich von 8,5 bis 12 aufweist.

2. Zusammensetzung nach Anspruch 1, wobei die Pigmentteilchen TiO₂-Teilchen sind und wobei das Organosilanpolymer ferner Trimethylsilylgruppen umfasst.

3. Zusammensetzung nach Anspruch 1, wobei das Organosilanpolymer mindestens zu 50 Gew.-% Struktureinheiten des Alkyltrihydroxysilans umfasst.

4. Zusammensetzung nach Anspruch 3, wobei das Organosilanpolymer eine Konzentration an Si-Atomen in dem Bereich von 0,1 bis 3 Gew.-% basierend auf das Gewicht des Polymers aufweist.

5. Zusammensetzung nach Anspruch 3, wobei das Organosilanpolymer eine Konzentration an Si-Atomen in dem Bereich von 4 bis 120 Si-Atomen/nm² des äußeren Pigmentoberflächenbereichs aufweist.

6. Zusammensetzung nach Anspruch 3, wobei das TiO₂ eine Volumenfeststofffraktion in dem Bereich von 0,37 bis 0,43 aufweist; eine Scherviskosität von maximal 0,25 Pa * s bei einer Schergeschwindigkeit von 0,1 s⁻¹ bei einer TiO₂-Volumenfeststofffraktion von 0,37; und eine Scherviskosität von maximal 1 Pa * s bei einer Schergeschwindigkeit von 0,2 s⁻¹ bei einer TiO₂-Volumenfeststofffraktion von 0,43.

7. Verfahren zum Herstellen einer wässrigen Dispersion von Metalloxidpigmentteilchen nach einem der Ansprüche 1 bis 6, das Verfahren umfassend den Schritt eines Inberührungbringens, in der Gegenwart von Wasser und bei einem pH-Wert von 8,5-12, von basischen Metalloxidpigmentteilchen mit einem Organosilan, um die wässrige Dispersion von Metalloxidpigmentteilchen auszubilden; wobei das Organosilan ein Alkyltrihydroxysilan oder ein Salz davon ist.

8. Verfahren nach Anspruch 7, wobei das Metalloxid TiO₂ ist.

9. Verfahren nach Anspruch 8, wobei das Alkyltrihydroxysilan mit der wässrigen Dispersion der basischen TiO₂-Pigmentteilchen als eine wässrige Lösung eines Salzes von Methyltrihydroxysilan bei dem pH-Wert von >12 in Berührung gebracht wird, wobei die wässrige Dispersion der basischen TiO₂-Teilchen ferner separat und gleichzeitig mit einer wässrigen Lösung einer Säure in Berührung gebracht wird, um einen pH-Wert in dem Bereich von 9 bis 10 aufrechtzuerhalten.

## Revendications

1. Composition comprenant une dispersion aqueuse de particules de pigment d'oxyde métallique revêtues d'un polymère d'organosilane comprenant des motifs structuraux d'un alkyltrihydroxysilane ou d'un sel de celui-ci, la dispersion aqueuse ayant un pH dans la plage de 8,5 à 12.

2. Composition selon la revendication 1, dans laquelle les particules de pigment sont des particules de TiO₂ et dans laquelle le polymère d'organosilane comprend en outre des groupes triméthylsilyle.

3. Composition selon la revendication 1, dans laquelle le polymère d'organosilane comprend au moins 50 % en poids de motifs structuraux de l'alkyltrihydroxysilane.

4. Composition selon la revendication 3, dans laquelle le polymère d'organosilane a une concentration d'atomes de Si dans la plage de 0,1 à 3 % en poids, sur la base du poids du polymère.

5. Composition selon la revendication 3, dans laquelle le polymère d'organosilane a une concentration d'atomes de Si dans la plage de 4 à 120 atomes de Si/nm² de surface externe de pigment.

6. Composition selon la revendication 3, dans laquelle le TiO₂ a une fraction volumique de solides dans la plage de 0,37 à 0,43 ; une viscosité de cisaillement non supérieure à 0,25 Pa * s à un taux de cisaillement de 0,1 s⁻¹ à une fraction de solides volumiques de TiO₂ de 0,37 ; et une viscosité de cisaillement non supérieure à 1 Pa * s à un taux de cisaillement de 0,2 s⁻¹ à une fraction de solides volumiques de TiO₂ de 0,43.

7. Procédé de préparation d'une dispersion aqueuse de particules de pigment d'oxyde métallique selon l'une quelconque des revendications 1 à 6, le procédé comprenant l'étape de mise en contact, en présence d'eau et à un pH de 8,5 à 12, de particules basiques de pigment d'oxyde métallique avec un organosilane pour former la dispersion aqueuse de particules de pigment d'oxyde métallique ; l'organosilane étant un alkyltrihydroxysilane ou un sel de celui-ci.

8. Procédé selon la revendication 7, dans lequel le l'oxyde métallique est TiO₂.

9. Procédé selon la revendication 8, dans lequel l'alkyltrihydroxysilane est mis en contact avec la dispersion aqueuse des particules de pigment basique de TiO₂ sous la forme d'une solution aqueuse d'un sel de méthyltrihydroxysilane à un pH > 12, la dispersion aqueuse de particules basiques de TiO₂ étant en outre mise en contact séparément et simultanément avec une solution aqueuse d'un acide pour maintenir un pH dans la gamme de 9 à 10.
